(19) Europäisches Patentamt
European Patent Office
Office européen des brevets

(11) **EP 1 037 378 B1**

(12) **EUROPÄISCHE PATENTSCHRIFT**

(45) Veröffentlichungstag und Bekanntmachung des Hinweises auf die Patenterteilung:
**08.08.2007   Patentblatt 2007/32**

(51) Int Cl.:
*H02P 21/00* *(2006.01)*

(21) Anmeldenummer: **00104102.9**

(22) Anmeldetag: **28.02.2000**

(54) **Verfahren und Vorrichtung zur Adaption des Systemparameters Rotorwiderstand einer drehgeberlosen, feldorientiert betriebenen Drehfeldmaschine**

Method and device for adaptation of the system parameter rotor-resistance of a field-orientated driven turning-field motor without a mechanical rotary transducer

Dispositif et procédé d' adaptation du paramètre système constitué par la résistance du rotor d'un moteur à champ tournant commandé par l'orientation de champ et dépourvu de capteur de rotation

(84) Benannte Vertragsstaaten:
**AT BE CH CY DE DK ES FI FR GB GR IE IT LI LU MC NL PT SE**

(30) Priorität: **10.03.1999   DE 19910609**

(43) Veröffentlichungstag der Anmeldung:
**20.09.2000   Patentblatt 2000/38**

(73) Patentinhaber: **SIEMENS AKTIENGESELLSCHAFT**
**80333 München (DE)**

(72) Erfinder: **Koch, Stefan Dipl.-Ing.**
**91466 Gerhardshofen (DE)**

(56) Entgegenhaltungen:
EP-A- 0 660 503          DE-A- 19 646 457
DE-A- 19 709 296          US-A- 4 884 023

- **BAADER U ET AL: "Direct self control of inverter-fed induction machine, a basis for speed control without speed-measurement" IEEE, 1. Oktober 1989 (1989-10-01), Seiten 486-492, XP010090971**

**Beschreibung**

Die Erfindung bezieht sich auf ein Verfahren zur Adaption des Systemparameters Rotorwiderstand gemäß Oberbegriff des Anspruchs 1 und auf eine Vorrichtung zur Adaption des Systemparameters Rotorwiderstand gemäß Oberbegriff des Anspruchs 7.

Ein Verfahren zur Adaption des Rotorwiderstandswertes ist bereits aus US 4 884 023 bekannt. Das Verfahren arbeitet mit einem Strommodell und einem Spannungsmodell. Zur Identifizierung des Läuferwiderstandes wird dem feldparallelen Ständerstromsollwert eine sinusförmige Spannung mit über der Nennfrequenz der Maschine liegender Frequenz, z.B. mit 80 Hz, überlagert. Mittels des Strommodells wird eine zur Modell-Flußachse parallele Komponente des EMK-Vektors ermittelt, mittels des Spannungsmodells ein ebensolcher Sollwert. Der Vergleich beider Komponenten führt zu einem Korrekturwert für den Rotorwiderstand.

Ein bei Drehzahlen um Drehzahl Null wesentlich genaueres, gattungsgemäßes Verfahren und eine gattungsgemäße Vorrichtung sind aus der DE 196 46 457 A1 bekannt. Gemäß dieser Offenlegungsschrift wird in einem vorbestimmten Frequenzbereich der Modell-Statorfrequenz der Signalverarbeitung ein niederfrequent moduliertes Flußbetragssignal zugeführt. Die Amplitude dieser Statorflußbetragsmodulation wird dabei so festgelegt, daß das mit dem niedrigsten Wert des modulierten Statorflusses erreichbare Drehmoment immer noch höher als das bei spielsweise in der Traktion bei diesen Statorfrequenzen üblicherweise geforderte maximale Drehmoment bei Nennstatorfluß ist. Der Vorrichtung zur Berechnung einer Blindmomentdifferenz, die der Signalverarbeitung nachgeschaltet ist, ist ein Umschalter nachgeschaltet, der einerseits mittels eines Ausgleichsreglers mit einem Eingang des Systemparameter Statorwiderstand und andererseits mit einer Einrichtung zur Spitzenwerterfassung und einer Einrichtung zur Vorzeichenerfassung verbunden ist. Ein zweiter Eingang dieser Einrichtung zur Vorzeichenerfassung ist mit dem Ausgang des Ausgleichsreglers verknüpft, der ausgangsseitig mit einem Eingang der Signalverarbeitung für die Rotormodellfrequenz verbunden ist. Die Ausgänge dieser beiden Einrichtungen sind jeweils mit einem Eingang eines Multiplizierers verbunden, der ausgangsseitig mit einem weiteren Ausgleichsregler verknüpft ist. Ausgangsseitig ist dieser weitere Ausgleichsregler mit einem Eingang eines Addierers verbunden, an dessen zweiten Eingang ein Vorsteuerwert für die Rotorwiderstandsadaption ansteht Ausgangsseitig ist dieser Addierer mit einem Eingang der Signalverarbeitung für den Systemparameter Rotorwiderstand verknüpft.

Im Falle einer Differenz zwischen der identifizierten Drehzahl und der Drehzahl der Drehfeldmaschine tritt aufgrund der Statorflußbetragsmodulation eine von Null verschiedene Blindmomentdifferenz auf, die dabei einer mit Flußbetragsmodulationsfrequenz schwingenden Wechselgröße entspricht. Der Spitzenwert hängt dabei zum einen von der gewählten Amplitude und der Frequenz der Statorbetragsmodulation ab, aber zum anderen auch maßgeblich von der Drehzahlabweichung zwischen Maschine und Modell. Je größer der Drehzahlfehler ist, um so größer ist der auftretende Spitzenwert der Blindmomentdifferenz. In einem vorbestimmten Frequenzbereich der Modell-Statorfrequenz wird das berechnete Produkt aus dem Spitzenwert der Blindmomentdifferenz und dem negierten Vorzeichen zur Rotorwiderstandsadaption verwendet. Dabei wird dieser Wert des Produktes mit dem weiteren Ausgleichsreglers zu Null geregelt, in dem der Systemparameter Rotorwiderstand verstellt wird. Damit der Ausgleichsregler nur dessen Abweichungen ausregeln muß, ist eine Vorsteuerung vorgesehen. Als Vorsteuergröße ist der Rotorwiderstand der Drehfeldmaschine im Nennzustand vorgesehen.

Gemäß diesem Verfahren wird die ermittelte Blindmomentdifferenz amplitudenmäßig und phasenmäßig ausgewertet, wobei dann diese Ergebnisse miteinander verknüpft werden, um eine Stellgröße für einen PI-Regler zu erhalten. Außerdem wird zur Ermittlung der Stellgröße das Vorzeichen des Phasenverschiebungswinkels zwischen der Blindmomentdifferenz und dem Wechselanteil der identifizierten Drehzahl benötigt. Dadurch ist die Rotorwiderstandsadaption und die Drehzahlidentifikation bei einem vorbestimmten Frequenzbereich der Modell-Statorfrequenz miteinander gekoppelt.

Der Erfindung liegt nun die Aufgabe zugrunde, ein Verfahren und eine Vorrichtung zur Adaption des Systemparameters Rotorwiderstand einer drehgeberlosen, feldorientiert betriebenen Drehfeldmaschine anzugeben, bei der die zuvor genannten Nachteile nicht mehr auftreten.

Dieser Aufgabe wird erfindungsgemäß gelöst mit den kennzeichnenden Merkmalen des Anspruchs 1 bzw. 7.

Dadurch, daß direkt die ermittelte Blindmomentdifferenz und ein ermittelter Statorflußbetrag und dessen ermittelter Mittelwert zur Bestimmung eines Rotorwiderstand-Korrekturwertes verwendet werden, ist die Kopplung zwischen Rotorwiderstandsadaption und Drehzahlidentifikation unterbrochen.

Da bei einem vorteilhaften Verfahren zur Bestimmung des Rotorwiderstand-Korrekturwertes modulationsfrequente Wechselanteile des Statorflußbetrages und der Blindmomentdifferenz miteinander multipliziert werden und nur der Gleichanteil dieses Produktes als Stellgröße einem Regler zugeführt wird, hat sich das erfindungsgemäße Verfahren gegenüber dem bekannten Verfahren wesentlich vereinfacht.

Somit erhält man ein Verfahren zur Adaption des Systemparameters Rotorwiderstand einer drehgeberlosen, feldorientiert betriebenen Drehfeldmaschine, die unabhängig vom Betriebszustand der Drehfeldmaschine funktioniert.

Vorteilhafte Ausgestaltungen sind den Unteransprüchen 2 bis 5 zu entnehmen.

Zur weiteren Erläuterung der Erfindung wird auf die Zeichnung Bezug genommen, in der ein Ausführungsbeispiel einer Vorrichtung zur Adaption des Systemparameters Rotorwiderstand einer drehgeberlosen, feldorientiert betriebenen Drehfeldmaschine schematisch veranschaulicht ist.

FIG 1    zeigt ein Blockschaltbild einer Ausführungsform einer erfindungsgemäßen Vorrichtung, die

FIG 2    zeigt ein Blockschaltbild eines bekannten vollständigen Maschinenmodells, die

FIG 3    zeigt ein Blockschaltbild einer Ausführungsform einer Einrichtung zur Bestimmung eines Rotorwiderstand-Korrekturwertes und die

FIG 4    zeigt in einem Diagramm über die Zeit t die Rotorwiderstands-Adaption im stationären Betrieb mit Nominalmoment.

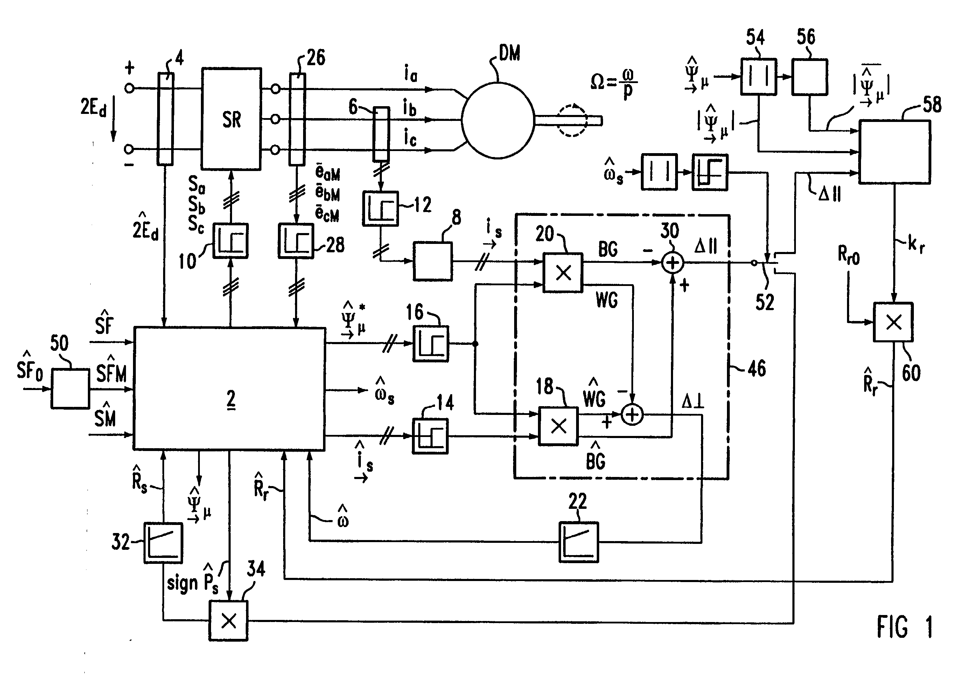

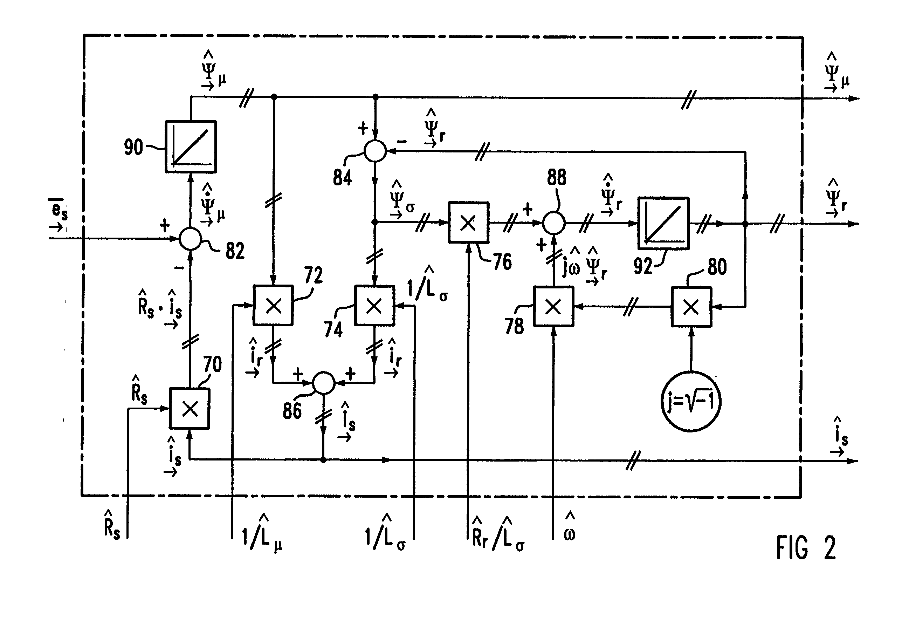

Die FIG 1 zeigt ein Blockschaltbild einer Ausführungsform einer erfindungsgemäßen Vorrichtung, wobei ein überwiegender Teil dieser Ausführungsform aus der DE 196 46 457 A1 bekannt ist. Dieser bekannte Teil dieser Vorrichtung umfaßt eine Drehfeldmaschine DM, die von einem Pulsstromrichter SR gespeist wird. Eingangsseitig steht am Pulsstromrichter SR einer Gleichspannung $2E_d$, auch als Zwischenkreis-Gleichspannung bezeichnet, an. Der Pulsstromrichter SR erhält von einer Signalverarbeitung 2 Steuersignale $S_a,S_b,S_c$. Außerdem gehört zum bekannten Teil dieser Vorrichtung Meßglieder 4,6,26, Totzeitglieder 10,12,14,16 und 28, ein Koordinatenwandler 8, eine Vorrichtung 46 zur Berechnung einer Blindmomentdifferenz $\Delta\|$ und ein Ausgleichsregler 22. Die Signalverarbeitung 2, die unter anderem ein vollständiges Maschinenmodell, das näher in der FIG 2 dargestellt ist, und einen Modulator enthält, ist ausgangsseitig mittels des Totzeitgliedes 10 mit dem Pulsstromrichter SR und mittels des Totzeitgliedes 14 mit einem Eingang der Vorrichtung 46 verknüpft. Der Koordinatenwandler 8 ist eingangsseitig über das Totzeitglied 12 mit dem Meßglied 6 und ausgangsseitig mit einem weiteren Eingang der Vorrichtung 46 verbunden. Eingangsseitig ist die Signalverarbeitung 2 mittels des Totzeitgliedes 28 mit dem Meßglied 26 und direkt mit dem Meßglied 4 verbunden. Der eine Ausgang der Vorrichtung 46, an dem eine Wirkmomentdifferenz $\Delta L$ ansteht, ist mittels eines Ausgleichsreglers 22 mit einem Eingang der Signalverarbeitung 2 verknüpft, wogegen der andere Ausgang dieser Vorrichtung 46, an der eine Blindmomentdifferenz $\Delta\|$ ansteht, mittels eines Multiplizierers 34 mit einem Eingang eines zweiten Ausgleichsreglers 32 verbunden ist, der ausgangsseitig mit einem Eingang der Signalverarbeitung 2 für den Systemparameter Statorwiderstand $\hat{R}_s$ verbunden ist.

Die Vorrichtung 46 zur Berechnung einer Wirk- und Blindmomentdifferenz $\Delta\perp$ und $\Delta\|$ weist zwei Multiplizierer 18 und 20 und zwei Vergleicher 24 und 30 auf. Die Ausgänge des Multiplizierers 18 sind jeweils mit den nichtinvertierenden Eingängen der beiden Vergleicher 24 und 30 verbunden. Die Ausgänge der Multiplizierer 20 sind jeweils mit den invertierenden Eingängen dieser beiden Vergleicher 24 und 30 verknüpft. Am Ausgang des Vergleichers 24 steht die Wirkmomentdifferenz $\Delta\perp$ an, wobei am Ausgang des Vergleichers 30 eine Blindmomentdifferenz $\Delta\|$ ansteht.

Wie dieser Darstellung zu entnehmen ist, ist der Signalverarbeitung 2 ein Signalgeber 50 vorgeschaltet, an dessen Eingang ein Wert eines Nennstatorflusses $\hat{SF}_0$ der Drehzahlmaschine DM ansteht. Ausgangsseitig steht ein niederfrequent moduliertes Flußbetragssignal SFM an, das entsprechend der Beziehung:

$$\hat{SFM}^2 = \left[0{,}72 + 0{,}28 \cdot \sin(\omega_m \cdot t)\right] \cdot \hat{SF}_0^2$$

oder entsprechend der Beziehung

$$\hat{SFM} = \left[87{,}5\,\% + 12{,}5\,\% \cdot \sin(\omega_m \cdot t)\right] \cdot \hat{SF}_0$$

berechnet wird. Welche Beziehung im Signalgeber 50 verwendet wird, hängt davon ab, ob die Signalverarbeitung 2 radizieren kann oder nicht.

Erfindungsgemäß ist diese bekannte Vorrichtung um einen Umschalter 52, einen Betragsbildner 54, einen Mittelwertbildner 56 und eine Einrichtung 58 zur Bestimmung eines Rotorwiderstand-Korrekturwertes $k_r$ ergänzt worden.

Der Umschalter 52 ist eingangsseitig mit dem Ausgang der Vorrichtung 46, an dem die berechnete Blindmomentdifferenz $\Delta\|$ ansteht, und ausgangsseitig einerseits mit einem Eingang der Einrichtung 58 und andererseits mit einem Eingang des Multiplizierers 34 verbunden.

Die Signalverarbeitung 2 liefert dem Betragsbildner 54 einen komplexen Raumzeiger $\hat{\underline{\Psi}}_\mu$ der Statorflußver-

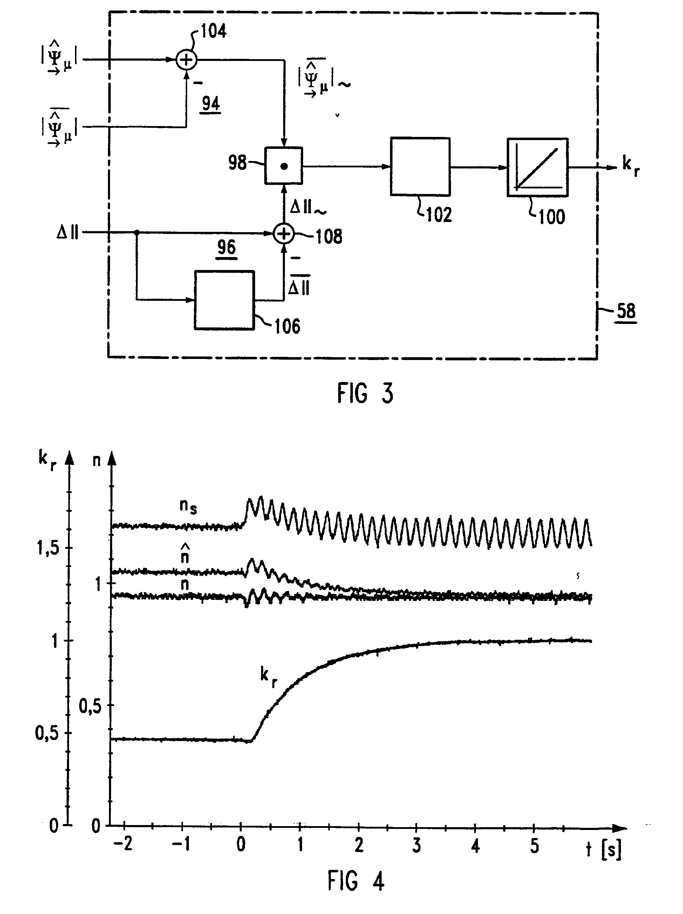

kettung, wogegen diese Signalverarbeitung 2 einen konjugiert komplexen Raumzeiger $\hat{\underline{\Psi}}_{\mu}^{*}$ der Statorflußverkettung jeweils einem zweiten Eingang der Multiplizierer 18 und 20 der Vorrichtung 46 liefert. Ausgangsseitig ist der Betragsbildner 54 einerseits mit dem Mittelwertbildner 56 und andererseits mit der Einrichtung 58 zur Bestimmung eines Ro- torwiderstand-Korrekturwertes $k_r$ verbunden. Der Mittelwertbildner 56 ist ebenfalls ausgangsseitig mit einem Eingang der Einrichtung 58 verknüpft. Eine Ausführungsform dieser Einrichtung 58 zur Bestimmung eines Rotorwiderstand- Korrekturwertes $k_r$ ist in der FIG 3 näher dargestellt. Ausgangsseitig ist die Einrichtung 58 mit einem Eingang des Multiplizierers 60 verknüpft, an dessen zweitem Eingang eine Vorsteuergröße ansteht. Als Vorsteuergröße ist der Ro- torwiderstand $R_{r0}$ der Drehfeldmaschine DM im Nennpunkt gewählt. Ausgangsseitig ist dieser Multiplizierer 60 mit einem Eingang der Signalverarbeitung 2 für den Systemparameter Rotorwiderstand $\hat{R}_r$ verbunden.

Die Signalverarbeitung 2 enthält unter anderem ein vollständiges Maschinenmodell und einen Modulator. Die FIG 2 zeigt ein Blockschaltbild eines aus der deutschen Offenlegungsschrift 195 31 771 bekannten vollständigen Maschinenmodells. Dieses vollständige Maschinenmodell weist mehrere Multiplizierer 70,72,74,76,78 und 80, zwei Vergleicher 82 und 84, zwei Addierglieder 86 und 88 und zwei Integrierglieder 90 und 92 auf. Diesem vollständigen Maschinenmodell werden zwei Eingangsgrößen, nämlich ein Stromrichter-Ausgangsspannungs-Raumzeiger $\overline{\underline{e}}_{s}$ und ein Schätzwert $\hat{\omega}$ der Winkelgeschwindigkeit und die Systemparameter Statorwiderstand $\hat{R}_s$, Rotorwiderstand $\hat{R}_r$, Ma- gnetisierungsinduktivität $\hat{L}_{\mu}$ und Streuinduktivität $\hat{L}_{\sigma}$ zugeführt. Aus diesen Vorgabewerten (Modellgrößen) berechnet das vollständige Maschinenmodell die Raumzeiger der Statorflußverkettung $\hat{\underline{\Psi}}_{\mu}$, der Rotorflußverkettung $\overline{\hat{\underline{\Psi}}}_{r}$ und des Statormodellstromes $\hat{\underline{i}}_{s}$. Der Statorstrom-Modellraumzeiger $\hat{\underline{i}}_{s}$ wird zur Berechnung von Schaltvariablen $S_a, S_b, S_c$ mittels eines nicht näher dargestellten Modulators der Signalverarbeitung 2 verwendet, wodurch die inneren stromabhängigen Spannungsabfälle des Stromrichters SR berücksichtigt werden können.

Da in der Vorrichtung gemäß FIG 1 der konjugiert komplexe Raumzeiger $\hat{\underline{\Psi}}_{\mu}^{*}$ der Statorflußverkettung ver- wendet wird, muß der ermittelte Raumzeiger $\hat{\underline{\Psi}}_{\mu}$ der Statorflußverkettung in einen konjugiert komplexen Raumzeiger gewandelt werden. Da in der deutschen Patentanmeldung 195 31 771 dieses vollständige Maschinenmodell ausführlich beschrieben ist, wird an dieser Stelle auf eine weitere Beschreibung dieses vollständigen Maschinenmodells verzichtet.

Die FIG 3 zeigt ein Blockschaltbild einer Einrichtung 58 zur Bestimmung eines Rotorwiderstand-Korrekturwertes $k_r$ nach FIG 1. Diese Einrichtung 58 weist eingangsseitig zwei Einrichtungen 94 und 96 zur Ermittlung von modulations- frequenten Wechselanteilen $|\hat{\underline{\Psi}}_{\mu}|_{\sim}$ und $\Delta\|_{\sim}$ auf, die ausgangsseitig jeweils mit einem Eingang eines Multiplizierers 98 verknüpft sind. Die Einrichtung 58 weist ausgangsseitig einen integrierenden Regler 100 auf, der eingangsseitig mittels eines gleitenden Mittelwertfilters 102 mit einem Ausgang des Multiplizierers 98 verbunden ist. Die Einrichtung 94 zur Ermittlung des modulationsfrequenten Wechselanteils $|\hat{\underline{\Psi}}_{\mu}|_{\sim}$ weist einen Vergleicher 104 auf. Am nichtinvertierenden Eingang dieses Vergleichers 104 steht ein ermittelter Statorflußbetrag $|\hat{\underline{\Psi}}_{\mu}|$ und an seinem invertierenden Eingang ein ermittelter Mittelwert $\overline{|\hat{\underline{\Psi}}_{\mu}|}$ des Statorflußbetrages $|\hat{\underline{\Psi}}_{\mu}|$ an. Am Ausgang dieses Vergleichers 104 steht dann der modulationsfrequente Wechselanteil $|\hat{\underline{\Psi}}_{\mu}|_{\sim}$ des Statorflußbetrages $|\hat{\underline{\Psi}}_{\mu}|$ an. Mittels dieses Vergleichers 104 wird der ermittelte Mittelwert $\overline{|\hat{\underline{\Psi}}_{\mu}|}$ des Statorflußbetrages $|\hat{\underline{\Psi}}_{\mu}|$ vom aktuellen Statorflußbetrag $|\hat{\underline{\Psi}}_{\mu}|$ subtra- hiert. Bei einer vorteilhaften Ausführungsform kann als Mittelwert $\overline{|\hat{\underline{\Psi}}_{\mu}|}$ mit ausreichender Genauigkeit der Mittelwert der Sollfunktion verwendet werden, so daß sich eine gesonderte Bestimmung erübrigt.

Die Blindmomentdifferenz $\Delta\|$ enthält bei Statorfrequenzen ungleich Null und vorhandener Drehzahldifferenz

$\Delta n$ ebenfalls einen Gleichanteil $\overline{\Delta\|}$. Dieser wird mittels eines gleitenden Mittelwertfilters 106, das den Mittelwert über die Dauer einer Modulationsperiode bestimmt, ermittelt. Dieser Gleichanteil $\overline{\Delta\|}$ wird mittels eines weiteren Vergleichers 108 von der ermittelten Blindmomentdifferenz $\Delta\|$ subtrahiert, so daß ausgangsseitig am Vergleicher 108 der modulationsfrequente Wechselanteil $\Delta\|_\sim$ der Blindmomentdifferenz $\Delta\|$ ansteht. Das gleitende Mittelwertfilter 106 und der weitere Vergleicher 108 sind Bestandteile der Einrichtung 96.

Die Multiplikation der beiden modulationsfrequenten Wechselanteile $\left|\underline{\hat{\Psi}}_\mu\right|_\sim$ und $\Delta\|_\sim$ erzeugt ein Signal,

dessen Gleichanteil je nach Phasenlage positiv oder negativ ist. Unter der Annahme, daß die Wechselanteile $\left|\underline{\hat{\Psi}}_\mu\right|_\sim$

und $\Delta\|_\sim$ sinusförmige Zeitverläufe haben, gilt:

$$\left|\underline{\hat{\Psi}}_\mu^s\right|_\sim \sin(\omega_{mod} \cdot t) \cdot \Delta\|_\sim^s \sin(\omega_{mod} \cdot t + \delta) =$$

$$\left|\underline{\hat{\Psi}}_\mu^s\right|_\sim \cdot \Delta\|_\sim^s \cdot \frac{1}{2}\left[\cos\delta - \cos(2\omega_{mod} \cdot t + \delta)\right]$$

Darin bezeichnet der Winkel $\delta$ die Phasenverschiebung zwischen dem Wechselanteil $\Delta\|_\sim$ der Blindmoment-

differenz $\Delta\|$ und der Modulation $\left|\underline{\hat{\Psi}}_\mu\right|_\sim$ des Statorflußbetrages $\left|\underline{\hat{\Psi}}_\mu\right|$. Der Exponent "s" kennzeichnet einen Schei-

telwert. Der Term $\cos\delta$ bestimmt das Vorzeichen des Gleichanteils. Er ist im Fall eines zu klein angenommenen Modellrotorwiderstands $\hat{R}_r < R_r$ und daraus resultierender Gleichphasigkeit der Wechselanteile positiv. Bei zu groß angenommenem Modellrotorwiderstand $\hat{R}_r > R_r$ und daraus resultierender Gegenphasigkeit der Wechselanteile ist er negativ. Der mit zweifacher Modulationsfrequenz schwingende Wechselanteil des ermittelten Produkts wird in einem zweiten Mittelwertfilter 102 unterdrückt, so daß ein Signal zur Verfügung steht, das bei stationärem Betrieb mit konstanter Rotorwiderstandsdifferenz eine reine Gleichgröße ist. Diese Gleichgröße wird direkt als Eingangssignal des nachfolgenden integrierenden Reglers 100 verwendet, an dessen Ausgang ein Rotorwiderstand-Korrekturwert $k_r$ ansteht. Da aufgrund des niederfrequenten Testsignals und der in der Praxis nur langsamen Änderung des Rotorwiderstands mit der Temperatur die Auswertung der modulationsfrequenten Blindmomentdifferenz $\Delta\|$ nur eine geringe Dynamik hat, genügt als integrierender Regler 100 ein einfacher I-Regler.

In der FIG 4 ist in einem Diagramm über der Zeit t eine Rotorwiderstandsidentifikation im stationären Betrieb mit nominalem Moment dargestellt. Außerdem ist in diesem Diagramm die bezogene gemessene Drehzahl n der Drehfeldmaschine DM zum Vergleich dargestellt. Da der Wert des Rotorwiderstandes $\hat{R}_r$ im Modell auf etwa 50 % seines tatsächlichen Wertes initialisiert ist, weicht die identifizierte Drehzahl $\hat{n}$ von der Drehzahl n der Drehfeldmaschine DM ab. Zum Zeitpunkt t = 0 wird die Rotorwiderstandsidentifikation eingeschaltet. Da nun der Flußbetrag moduliert wird, hat die Statorfrequenz $n_s$ wegen des konstanten Drehmomentes einen modulationsfrequenten Anteil. Dieser findet sich auch im Drehzahlsignal $\hat{n}$ der Signalverarbeitung 2 wieder, solange der Wert des Rotorwiderstandes $\hat{R}_r$ grob falsch ist, und ebenso in der Drehzahl n der Drehfeldmaschine DM. Dies zeigt, daß das reale Drehmoment nicht konstant ist, bis der Rotorwiderstand $\hat{R}_r$ korrekt adaptiert wird. Nach beispielsweise 4 Sekunden stimmt der Rotorwiderstand $\hat{R}_r$ des Modells mit dem wirklichen Wert der Drehfeldmaschine DM überein, gleichzeitig wird die Drehzahl richtig identifiziert. Da der Rotorwiderstand $\hat{R}_r$ sich nur langsam mit der Wicklungstemperatur der Drehfeldmaschine DM ändert, ist die Dynamik dieser Vorrichtung zur Adaption des Rotorwiderstandes in der Praxis ausreichend.

Ein Vorteil dieser Rotorwiderstandsadaption mit Modulation des Statorflußbetrages ist, daß nur die durch das Testsignal selbst verursachten Rotorströme ausgewertet werden. Die Adaption ist deshalb unabhängig vom Belastungszustand der Maschine, womit sie auch im Leerlauf funktioniert. Außerdem stellt das Verfahren keine speziellen Anforderungen an die elektrischen Eigenschaften der Maschine, d.h., es arbeitet auch in Betriebsbereichen, in denen sich die Maschine linear verhält.

**Patentansprüche**

1. Verfahren zur Adaption des Systemparameters Rotorwiderstand ($\hat{R}_r$) einer drehgeberlosen, feldorientiert betriebe-

nen Drehfeldmaschine (DM), wobei in Abhängigkeit eines Fluß-Soll-wertes $(\hat{SF})$, eines Drehmoment-Sollwertes $(\hat{SM})$, einer eingangsseitig am Pulsstromrichter (SR) der Drehfeldmaschine (DM) anstehenden Gleichspannung $(2E_d)$, gemessener Stromrichter-Ausgangsspannungswerte $(\overline{e}_{aM}, \overline{e}_{bM}, \overline{e}_{cM})$ und Systemparameter $(\hat{L}_\mu, \hat{L}_o, \hat{R}_s, \hat{R}_r/\hat{L}_o, \hat{\omega})$ ein Statorstrom-Modellraumzeiger $(\underline{\hat{i}}_S)$ und ein konjugiert komplexer Raumzeiger $(\underline{\hat{\Psi}}_\mu^{\star})$ der Statorflußverkettung berechnet werden, wobei als Flußbetrags-Sollwert $(\hat{SF})$ ein niederfrequent moduliertes Flußbetragssignal $(\hat{SFM})$ vorgesehen ist, wobei in Abhängigkeit des berechneten Statorstrom-Modellraumzeigers $(\underline{\hat{i}}_S)$, eines ermittelten Statorstrom-Istraumzeigers $(\underline{i}_S)$ und des berechneten konjugiert komplexen Raumzeigers $(\underline{\hat{\Psi}}_\mu^{\star})$ der Statorflußverkettung eine Blindmomentdifferenz $(\Delta\|)$ ermittelt wird, **dadurch gekennzeichnet, daß** aus einem berechneten Statorfluß $(\underline{\hat{\Psi}}_\mu)$ ein Statorflußbetrag $(|\underline{\hat{\Psi}}_\mu|)$ und dessen Mittelwert $(\overline{|\underline{\hat{\Psi}}_\mu|})$ ermittelt wird und daß in Abhängigkeit der Blindmomentdifferenz $(\Delta\|)$, des Statorflußbetrages $(|\underline{\hat{\Psi}}_\mu|)$ und seines Mittelwertes $(\overline{|\underline{\hat{\Psi}}_\mu|})$ ein Rotorwiderstand-Korrekturwert $(k_r)$ bestimmt wird, der mit einem Vorsteuerwert $(R_{r0})$ des Systemparameters Rotorwiderstand $(\hat{R}_r)$ multipliziert wird.

2. Verfahren nach Anspruch 1, **dadurch gekennzeichnet, daß** zur Bestimmung des Rotorwiderstand-Korrekturwertes $(k_r)$ jeweils ein modulationsfrequenter Wechselanteil des Statorflußbetrages $(|\underline{\hat{\Psi}}_\mu|_\sim)$ und der Blindmomentdifferenz $(\Delta\|_\sim)$ ermittelt werden, die miteinander multipliziert werden, und daß ein Wechselanteil des Produktsignals unterdrückt wird und der verbleibende Gleichanteil zu einem Rotorwiderstand-Korrekturwert $(k_r)$ auf integriert wird.

3. Verfahren nach Anspruch 2, **dadurch gekennzeichnet**, zur Bestimmung eines modulationsfrequenten Wechselanteils $(|\underline{\hat{\Psi}}_\mu|_\sim)$ des Statorflußbetrages $(|\underline{\hat{\Psi}}_\mu|)$ der ermittelte Statorflußbetrag-Mittelwert $(\overline{|\underline{\hat{\Psi}}_\mu|})$ vom ermittelten Statorflußbetrag $(|\underline{\hat{\Psi}}_\mu|)$ subtrahiert wird.

4. Verfahren nach Anspruch 2, **dadurch gekennzeichnet, daß** zur Bestimmung einer modulationsfrequenten Blindmomentdifferenz $(\Delta\|_\sim)$ aus der ermittelten Blindmomentdifferenz $(\Delta\|)$ ein Mittelwert $(\overline{\Delta\|})$ gebildet wird, der anschließend von der ermittelten Blindmomentdifferenz $(\Delta\|)$ subtrahiert wird.

5. Verfahren nach einem der Ansprüche 1 bis 4, **dadurch gekennzeichnet, daß** das niederfrequent modulierte Flußbetragssignal (SFM) nur zeitweise aufgeschaltet wird.

6. Verfahren nach einem der Ansprüche 1 bis 5, **dadurch gekennzeichnet, daß** bei der Ermittlung einer Blindmomentdifferenz $(\Delta\|)$ anstelle von Statorstrom-Modellraumzeiger $(\underline{\hat{i}}_S)$ und -Istraumzeiger $(\underline{i}_S)$ normierte Statorstrom-Modellraumzeiger $(\underline{\hat{y}}_S)$ und -Istraumzeiger $(\underline{i}_S)$ verwendet werden.

7. Vorrichtung zur Adaption des Systemparameters Rotorwiderstand $(\hat{R}_r)$ einer drehgeberlosen, feldorientiert betriebenen Drehfeldmaschine (DM) mit einer Signalverarbeitung (2), die ein vollständiges Maschinenmodell und eine Einrichtung zur Generierung von Steuersignalen ($S_a$, $S_b$, $S_c$) enthält, mit einem Strommeßglied (6) mit nachgeschalteten Koordinatenwandler (8) und mit einem Signalgeber (50), an dessen Eingang ein Wert eines Nennstatorflusses ($SF_0$) der Drehfeldmaschine (DM) ansteht, wobei eine Vorrichtung (46) zur Berechnung einer Blindmomentdifferenz ($\Delta\|$) eingangsseitig mit zwei Ausgängen der Signalverarbeitung (2) verbunden ist, an denen ein Statorstrom-Modellraumzeiger ($\hat{\underline{i}}_s$) und ein konjugiert komplexer Raumzeiger ($\hat{\underline{\Psi}}_\mu^*$) der Statorflußverkettung ansteht, **dadurch gekennzeichnet, daß** ein Betragsbildner (54) mit nachgeschaltetem Mittelwertbildner (56) und eine Einrichtung (58) zur Bestimmung eines Rotorwiderstand-Korrekturwertes ($k_r$) vorgesehen sind, daß die Eingänge dieser Einrichtung (58) mit einem Ausgang des Betragsbildners (54), des Mittelwertbildners (56) und der Vorrichtung (46) verbunden sind, daß der Betragsbildner (54) eingangsseitig mit einem Ausgang der Signalverarbeitung (2), an dem ein Statorfluß-Raumzeiger ($\hat{\underline{\Psi}}_\mu$) ansteht, verknüpft ist und daß die Einrichtung (58) ausgangsseitg mit einem Eingang eines Multiplizierers (60) verbunden ist, mit dessen zweitem Eingang ein Vorsteuerwert ($\hat{R}_{r0}$) des Systemparameters Rotorwiderstand ($\hat{R}_r$) der Signalverarbeitung (2) verknüpft ist.

8.  Vorrichtung nach Anspruch 7, **dadurch gekennzeichnet, daß** die Vorrichtung (46) zur Berechnung einer Blindmomentdifferenz ($\Delta\|$) zwei Multiplizierer (18,20) und zwei Vergleicher (24,30) aufweist, daß die ersten Ausgänge der beiden Multiplizierer (18,20) mit den Eingängen des ersten Vergleichers (24) und die zweiten Ausgänge der beiden Multiplizierer (18,20) mit den Eingängen des zweiten Vergleichers (30) verknüpft sind, daß die ersten Eingänge der beiden Multiplizierer (18,20) mit dem Ausgang der Signalverarbeitung (2) verbunden sind, an dem ein konjugiert komplexer Raumzeiger ($\hat{\underline{\Psi}}_\mu^*$) der Statorflußverkettung ansteht, und daß jeweils an einem zweiten Eingang der beiden Multiplizierer (18,20) entweder ein Statorstrom-Modellraumzeiger ($\hat{\underline{i}}_s$) oder ein Statorstrom-Istraumzeiger ($\underline{i}_s$) ansteht.

9.  Vorrichtung nach Anspruch 7, **dadurch gekennzeichnet, daß** die Einrichtung (58) zur Bestimmung eines Rotorwiderstand-Korrekturwertes ($k_r$) eingangsseitig zwei Einrichtungen (94,96) zur Ermittlung von modulationsfrequenten Wechselanteilen ( $|\hat{\underline{\Psi}}_\mu|_\sim$ , $\Delta\|_\sim$), die ausgangsseitig jeweils mit einem Eingang eines Multiplizierers (98) verknüpft sind, und ausgangsseitig einen integrierenden Regler (100) aufweist, der eingangsseitig mittels eines gleitenden Mittelwertbildners (102) mit dem Ausgang des Multiplizierers (98) verbunden ist.

10. Vorrichtung nach Anspruch 9, **dadurch gekennzeichnet, daß** als Einrichtung (94) zur Ermittlung eines modulationsfrequenten Wechselanteils ( $|\hat{\underline{\Psi}}_\mu|_\sim$ ) ein Vergleicher (104) vorgesehen ist.

11. Vorrichtung nach Anspruch 9, **dadurch gekennzeichnet, daß** als Einrichtung (96) zur Ermittlung eines modulationsfrequenten Wechselanteils ($\Delta\|_\sim$) ein Vergleicher (108) mit einem gleitenden Mittelwertfilter (106) vorgesehen ist, dessen Eingang mit dem nichtinvertierenden Eingang des Vergleichers (108) und dessen Ausgang mit dem invertierenden Eingang des Vergleichers (108) verknüpft sind.

**Claims**

1.  Method for adaptation of the system parameter rotor resistance ($\hat{R}_r$) of a polyphase machine (DM) which is operated on a field-oriented basis and has no rotary encoders with a stator-current model space vector ( $\hat{\underline{i}}_s$ ) and a complex-conjugate space vector ( $\hat{\underline{\Psi}}_\mu^*$ ) of the stator flux linkages being calculated as a function of a flux nominal value ($\hat{SF}$), of a torque nominal value ($\hat{SM}$), of a DC voltage ($2E_d$) which is applied to the input side of the pulse-control converter (SR) of the polyphase machine (DM), of the measured converter output voltage values ($\bar{e}_{aM}$, $\bar{e}_{bM}$, $\bar{e}_{cM}$) and system parameters ($\hat{L}_\mu$, $\hat{L}_\sigma$, $\hat{R}_r/\hat{L}_\sigma$, $\hat{\omega}$), with a low-frequency-modulated flux magnitude signal

$(S\hat{F}M)$ being provided as the flux magnitude nominal value $(S\hat{F})$ and with a dummy torque difference $(\Delta\|)$ being determined as a function of the calculated stator current model space vector $(\underrightarrow{i}_s)$ of a determined stator current actual space vector $(\underrightarrow{i}_s)$ and of the calculated complex-conjugate space vector $(\underrightarrow{\hat{\Psi}}_\mu^*)$ of the stator flux linkages, **characterized in that** a stator flux magnitude $(|\underrightarrow{\hat{\Psi}}_\mu|)$ and its mean value $(|\overline{\underrightarrow{\hat{\Psi}}_\mu}|)$ are determined from a calculated stator flux $(\underrightarrow{\hat{\Psi}}_\mu)$, and **in that** a rotor resistance correction value $(k_r)$ is determined as a function of the dummy torque difference $(\Delta\|)$ of the stator flux magnitude $(|\underrightarrow{\hat{\Psi}}_\mu|)$ and of its mean value $(|\overline{\underrightarrow{\hat{\Psi}}_\mu}|)$, and is multiplied by a pilot-control value $(R_{r0})$ of the system parameter rotor resistance $(\hat{R}_r)$.

2. Method according to Claim 1, **characterized in that** a modulation-frequency alternating component of the stator flux magnitude $(|\underrightarrow{\hat{\Psi}}_\mu|\sim)$ and of the dummy torque difference $(\Delta\|\sim)$ are in each case determined, and are multiplied by one another, in order to establish the rotor resistance correction value $(k_r)$ and **in that** an alternating component of the product signal is suppressed, and the remaining DC component is integrated to form a rotor resistance correction value $(k_r)$.

3. Method according to Claim 2, **characterized in that** the determined stator flux magnitude mean value $(|\overline{\hat{\Psi}\mu}|)$ is subtracted from the determined stator flux magnitude $(|\underrightarrow{\hat{\Psi}}_\mu|)$ in order to establish a modulation-frequency alternating component $(|\underrightarrow{\hat{\Psi}}_\mu|\sim)$ of the stator flux magnitude $(|\underrightarrow{\hat{\Psi}}_\mu|)$.

4. Method according to Claim 2, **characterized in that** a mean value $(\overline{\Delta\|})$ is formed from the determined dummy torque difference $(\Delta\|)$ and is then subtracted from the determined dummy torque difference $(\Delta\|)$ in order to establish a modulation-frequency dummy torque difference $(\Delta\|\sim)$.

5. Method according to one of Claims 1 to 4, **characterized in that** the low-frequency-modulated flux magnitude signal $(S\hat{F}M)$ is applied only at times.

6. Method according to one of Claims 1 to 5, **characterized in that** normalized stator current model space vectors $(\underrightarrow{\hat{v}}_s)$ and actual space vectors $(\underrightarrow{v}_s)$ are used instead of stator current model space vectors $(\underrightarrow{\hat{i}}_s)$ and actual space vectors $(i_s)$ for determination of a dummy torque difference $(\Delta\|)$.

7. Apparatus for adaptation of the system parameter rotor resistance $(\hat{R}_r)$ of a polyphase machine (DM) which is operated on a field-orientated basis and has no rotary encoders, having signal processing (2) which contains a complete machine model and a device for generation of control signals $(S_a, S_b, S_c)$, having a current measurement element (6) with a downstream coordinate converter (8) and with a signal transmitter (50), to whose input a value of a rated stator flux $(S\hat{F}_0)$ of the polyphase machine (DM) is applied with an apparatus (46) for calculation of a dummy torque difference $(\Delta\|)$ being connected on the input side to two outputs of the signal processing (2) at which a stator current model space vector $(\underrightarrow{\hat{i}}_s)$ and a complex-conjugate space vector $(\underrightarrow{\hat{\Psi}}_\mu^*)$ of the stator flux linkages are produced, **characterized in that** an absolute-value generator (54) with a downstream mean-value generator (56) and a device (58) for establishing a rotor resistance correction value $(k_r)$ are provided, **in that** the inputs of this device (58) are connected to an output of the absolute-value generator (54), of the mean-value generator (56) and of the apparatus (46), **in that** the input side of the absolute-value generator (54) is linked to an output of the signal processing (2) at which a stator flux space vector $(\underrightarrow{\hat{\Psi}}_\mu)$ is produced, and **in that** the output side of the device (58) is connected to an input of a multiplier (60), to whose second input a pilot-control value $(\hat{R}_{r0})$ for the

system parameter rotor resistance ($\hat{R}_r$) of the signal processing (2) is linked.

8. Apparatus according to Claim 7, **characterized in that** the apparatus (46) for calculating a dummy torque difference ($\Delta\|$) has two multipliers (18, 20) and two comparators (24, 30) **in that** the first outputs of the two multipliers (18, 20) are linked to the inputs of the first comparator (24), and the second outputs of the two multipliers (18, 20) are linked to the inputs of the second comparator (30), **in that** the first inputs of the two multipliers (18, 20) are connected to the output of the signal processing (2) at which a complex-conjugate space vector $\left(\underline{\hat{\Psi}}_{\mu}{}^{*}\right)$ of the stator flux linkages is produced, and **in that** either a stator current model space vector $\left(\underline{\hat{\vec{i}}}_s\right)$ or a stator current actual space vector $\left(\underline{\vec{i}}_s\right)$ is applied to a second input of each of the two multipliers (18, 20).

9. The apparatus as claimed in Claim 7, **characterized in that** the input side of the device (58) for establishing a rotor resistance correction value ($k_r$) has two devices (94, 96) for determining modulation-frequency alternating components ($\left|\underline{\hat{\vec{\Psi}}}_{\mu}\right|\sim$, $\Delta\|\sim$), which are each linked on the output side to an input of a multiplier (98), and on the output side has an integrating regulator (100) whose input side is connected by means of a sliding mean-value generator (102) to the output of the multiplier (98).

10. Apparatus according to Claim 9, **characterized in that** a comparator (104) is provided as the device (94) for determining a modulation-frequency alternating component ($\left|\underline{\vec{\hat{\Psi}}}_{\mu}\right|\sim$)

11. Apparatus according to Claim 9, **characterized in that** a comparator (108) with a sliding mean-value filter (106) is provided as the device (96) for determining a modulation-frequency alternating component ($\Delta\|\sim$), whose input is linked to the non-inverting input of the comparator (108), and whose output is linked to the inverted input of the comparator (108).

## Revendications

1. Procédé d'adaptation du paramètre de système constitué par la résistance rotorique ($\hat{R}_r$) d'une machine polyphasée (DM) commandée par orientation de champ et sans capteur de rotation, dans lequel on calcule en fonction d'une valeur de consigne de flux $\left(\hat{SF}\right)$, d'une valeur de consigne de couple $\left(\hat{SM}\right)$, d'une tension continue ($2E_d$) présente côté entrée au convertisseur impulsionnel (SR) de la machine polyphasée (DM), de valeurs mesurées de tension de sortie de convertisseur ($\overline{e}_{aM}$, $\overline{e}_{bM}$, $\overline{e}_{cM}$) et de paramètres de système ($\hat{L}_{\mu}$, $\hat{L}_{\sigma}$, $\hat{R}_s$, $\hat{R}_r / \hat{L}_{\sigma}$, $\hat{\omega}$) un vecteur spatial modèle de courant statorique $\left(\underline{\hat{\vec{i}}}_s\right)$ et un vecteur spatial complexe conjugué $\left(\underline{\hat{\vec{\Psi}}}_{\mu}{}^{*}\right)$ de l'enchaînement de flux statorique, un signal de valeur absolue de flux modulé à basse fréquence (SFM) étant prévu comme valeur de consigne de valeur absolue de flux (SF), et dans lequel on détermine en fonction du vecteur spatial modèle de courant statorique calculé $\left(\underline{\hat{\vec{i}}}_s\right)$, d'un vecteur spatial réel de courant statorique déterminé $\left(\underline{\vec{i}}_s\right)$ et du vecteur spatial complexe conjugué calculé $\left(\underline{\hat{\vec{\Psi}}}_{\mu}{}^{*}\right)$ de l'enchaînement de flux statorique une différence de moment réactif ($\Delta\|$), **caractérisé par le fait que** l'on détermine à partir d'un flux statorique calculé $\left(\underline{\vec{\hat{\Psi}}}_{\mu}\right)$ une valeur absolue de flux statorique $\left(\left|\underline{\vec{\hat{\Psi}}}_{\mu}\right|\right)$ et sa valeur moyenne $\left(\overline{\left|\underline{\vec{\hat{\Psi}}}_{\mu}\right|}\right)$ et que l'on détermine en fonction de la différence

de moment réactif ($\Delta\|$), de la valeur absolue de flux statorique $\left(\left|\overset{\wedge}{\underset{\to\mu}{\Psi}}\right|\right)$ et de sa valeur moyenne $\left(\overline{\left|\overset{\wedge}{\underset{\to\mu}{\Psi}}\right|}\right)$ une valeur correctrice de résistance rotorique ($k_r$) qui est multipliée par une valeur de préréglage ($R_{r0}$) du paramètre de système constitué par la résistance rotorique ($\overset{\wedge}{R}_r$).

**2.** Procédé selon la revendication 1, **caractérisé par le fait que**, pour la détermination de la valeur correctrice de résistance rotorique ($k_r$), on détermine à chaque fois une composante alternative en modulation de fréquence de la valeur absolue de flux statorique $\left(\left|\overset{\wedge}{\underset{\to\mu}{\Psi}}\right|_\sim\right)$ et la différence de moment réactif ($\Delta\|_\sim$), ces valeurs étant multipliées entre elles, une composante alternative du signal de produit est supprimée et la composante continue restante est intégrée pour donner une valeur correctrice de résistance rotorique ($k_r$).

**3.** Procédé selon la revendication 2, **caractérisé par le fait que**, pour la détermination d'une composante alternative en modulation de fréquence $\left(\left|\overset{\wedge}{\underset{\to\mu}{\Psi}}\right|_\sim\right)$ de la valeur absolue de flux statorique $\left(\left|\overset{\wedge}{\underset{\to\mu}{\Psi}}\right|\right)$, on soustrait la valeur moyenne de valeur absolue de flux statorique déterminée $\left(\overline{\left|\overset{\wedge}{\underset{\to\mu}{\Psi}}\right|}\right)$ de la valeur absolue de flux statorique déterminée $\left(\left|\overset{\wedge}{\underset{\to\mu}{\Psi}}\right|\right)$.

**4.** Procédé selon la revendication 2, **caractérisé par le fait que**, pour la détermination d'une différence de moment réactif en modulation de fréquence ($\Delta\|_\sim$), on forme à partir de la différence de moment réactif déterminée ($\Delta\|$) une valeur moyenne ($\overline{\Delta\|}$) qui est ensuite soustraite de la différence de moment réactif déterminée ($\Delta\|$).

**5.** Procédé selon l'une des revendications 1 à 4, **caractérisé par le fait que** le signal de valeur absolue de flux modulé à basse fréquence (SFM) n'est appliqué que temporairement.

**6.** Procédé selon l'une des revendications 1 à 5, **caractérisé par le fait que**, lors de la détermination d'une différence de moment réactif ($\Delta\|$), on utilise à la place du vecteur spatial modèle de courant statorique $\left(\overset{\wedge}{\underset{\to s}{i}}\right)$ et du vecteur spatial réel de courant statorique $\left(\underset{\to s}{i}\right)$ un vecteur spatial modèle de courant statorique normé $\left(\overset{\wedge}{\underset{\to s}{y}}\right)$ et un vecteur spatial réel de courant statorique normé $\left(\underset{\to s}{y}\right)$.

**7.** Dispositif d'adaptation du paramètre de système constitué par la résistance rotorique ($\overset{\wedge}{R}_r$) d'une machine polyphasée (DM) commandée par orientation de champ et sans capteur de rotation avec un traitement de signal (2) qui contient un modèle de machine complet et un dispositif de génération de signaux de commande ($S_a$, $S_b$, $S_c$), avec un élément de mesure de courant (6) avec convertisseur de coordonnées (8) branché du côté aval et avec un générateur de signal (50) à l'entrée duquel se trouve une valeur d'un flux statorique nominal $\left(\overset{\wedge}{SF}_0\right)$ de la machine polyphasée (DM), un dispositif (46) pour le calcul d'une différence de moment réactif ($\Delta\|$) étant relié côté entrée à deux sorties du traitement de signal (2) auxquelles se trouvent un vecteur spatial modèle de courant statorique $\left(\overset{\wedge}{\underset{\to s}{i}}\right)$ et un

vecteur spatial complexe conjugué $\left( \overset{\wedge}{\underset{\rightarrow\ \mu}{\Psi}}{}^{*} \right)$ de l'enchaînement de flux statorique, **caractérisé par le fait qu'**il est prévu un dispositif de formation de valeur absolue (54) avec dispositif de formation de valeur moyenne (56) branché du côté aval et un dispositif (58) pour la détermination d'une valeur correctrice de résistance rotorique ($k_r$), que les entrées de ce dispositif (58) sont reliées à une sortie du dispositif de formation de valeur absolue (54), du dispositif de formation de valeur moyenne (56) et du dispositif (46), que le dispositif de formation de valeur absolue (54) est relié côté entrée à une sortie du traitement de signal (2) à laquelle se trouve un vecteur spatial de flux statorique $\left( \overset{\wedge}{\underset{\rightarrow\ \mu}{\Psi}} \right)$ et que le dispositif (58) est relié côté sortie à une entrée d'un multiplicateur (60) à la deuxième entrée duquel est appliquée une valeur de préréglage ($\overset{\wedge}{R}_{r0}$) du paramètre de système constitué par la résistance rotorique ($\overset{\wedge}{R}_{r}$) du traitement de signal (2).

**8.** Dispositif selon la revendication 7, **caractérisé par le fait que** le dispositif (46) pour le calcul d'une différence de moment réactif ($\Delta\|\|$) comporte deux multiplicateurs (18, 20) et deux comparateurs (24, 30), que les premières sorties des deux multiplicateurs (18, 20) sont reliées aux entrées du premier comparateur (24) et les deuxièmes sorties des deux multiplicateurs (18, 20) sont reliées aux entrées du deuxième comparateur (30), que les premières entrées des deux multiplicateurs (18, 20) sont reliées à la sortie du traitement de signal (2) à laquelle se trouve un vecteur spatial complexe conjugué $\left( \overset{\wedge}{\underset{\rightarrow\ \mu}{\Psi}}{}^{*} \right)$ de l'enchaînement de flux statorique et qu'il y a respectivement à une deuxième entrée des deux multiplicateurs (18, 20) soit un vecteur spatial modèle de courant statorique $\left( \overset{\wedge}{\underset{\rightarrow s}{i}} \right)$ soit un vecteur spatial réel de courant statorique $\left( \underset{\rightarrow s}{i} \right)$.

**9.** Dispositif selon la revendication 7, **caractérisé par le fait que** le dispositif (58) pour la détermination d'une valeur correctrice de résistance rotorique ($k_r$) comporte côté entrée deux dispositifs (94, 96) pour la détermination de composantes alternatives en modulation de fréquence ($\left| \overset{\wedge}{\underset{\rightarrow\ \mu}{\Psi}} \right|_{\sim}$, $\Delta\|\|_{\sim}$), lesquels dispositifs sont reliés côté sortie à chaque fois à une entrée d'un multiplicateur (98), et côté sortie un régulateur intégrateur (100), lequel est relié côté entrée à la sortie du multiplicateur (98) au moyen d'un dispositif de formation de valeur moyenne lissant (102).

**10.** Dispositif selon la revendication 9, **caractérisé par le fait qu'**un comparateur (104) est prévu comme dispositif (94) pour la détermination d'une composante alternative en modulation de fréquence $\left( \left| \overset{\wedge}{\underset{\rightarrow\ \mu}{\Psi}} \right|_{\sim} \right)$.

**11.** Dispositif selon la revendication 9, **caractérisé par le fait qu'**un comparateur (108) avec un filtre de valeur moyenne lissant (106) est prévu comme dispositif (96) pour la détermination d'une composante alternative en modulation de fréquence ($\Delta\|\|_{\sim}$), l'entrée dudit filtre étant reliée à l'entrée non inversée du comparateur (108) et la sortie dudit filtre étant reliée à l'entrée inversée du comparateur (108).

FIG 1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4884023 A
- DE 19646457 A1
- DE 19531771